# EUROPEAN PATENT SPECIFICATION

(11) **EP 3 393 258 B1**
(45) Date of publication and mention of the grant of the patent: **03.09.2025**
(21) Application number: 16823533.1
(22) Date of filing: 22.12.2016
(51) Int. Cl.: A23C 9/12, A23C 9/123, A23C 11/10

(54) **METHOD FOR MANUFACTURING A STRAINED FERMENTED DAIRY PRODUCT USING LACTASE**
HERSTELLUNGSMETHOD EINES ABGETROPFTEN FERMENTIERTEN MILCHPRODUKTS UNTER VERWENDUNG VON LACTASE
PROCÉDÉ DE FABRICATION D'UN PRODUIT LAITIER FERMENTÉ FILTRÉ À L'AIDE DE LACTASE

(30) Priority: 24.12.2015 US 201562387392 P; 24.12.2015 US 201562387391 P; 24.12.2015 US 201562387393 P; 24.12.2015 US 201562387416 P
(43) Date of publication of application: 31.10.2018
(73) Proprietor: Danone US, LLC, White Plains, NY 10605 (US)
(72) Inventor: MCCORMICK, Casey, Poughquag NY 12570 (US)
(74) Representative: Regimbeau
(86) International application number: PCT/US2016/068368
(87) International publication number: WO 2017/112883

(56) References cited:
- WO-A1-2008/000895
- WO-A1-2011/141762
- WO-A1-2015/008103
- WO-A1-2015/193449
- WO-A1-2015/193459
- WO-A1-2017/109532
- TAMIME A: "The production of yoghurt & concentrated yoghurt from hydrolysed milk", CULTURED DAIRY PRODUCTS JOURNAL, XX, XX, vol. 13, no. 3, 1 January 1978 (1978-01-01), pages 16 - 21, XP002096619
- DATABASE GNPD [online] MINTEL; May 2015 (2015-05-01), ANONYMOUS: "Strawberry Flavoured Yoghurt", XP002768419, Database accession no. 3188851

## Description

The present invention relates to an improved method for manufacturing a strained fermented dairy product.

Fermented dairy products are recognized by consumers as healthy food having nutritional benefits. Among these fermented dairy products, strained fermented dairy products present the interest to contain higher levels of proteins than in conventional fermented dairy products, which represent an additional nutritional benefit.

Such strained fermented dairy products are generally prepared by the same method as for conventional fermented dairy products, with an additional step consisting in the separation of a liquid phase also called whey (containing generally water, lactose, minerals, etc.) from the conventional fermented dairy products. The remaining solid phase constitutes the desired strained fermented dairy products having an increased protein content. Such processes are disclosed notably in WO 2014/114970, WO 2014/169171 or WO 2015/193459.

The separation step can be performed notably by centrifugation. However, due to the formation of a thicker dairy product (solid phase) during this step, clogging issues of the separating device can occur after only few hours of operation of the production line and can impair the capacity of production.

In view of the large consumers enthusiasm for this type of product, there is also an important expectation to have a good product with a good texture, a good taste, a good stability in the time (for example a weak post-acidification) and/or a sugar reduction.

There is thus a need for improved methods for manufacturing strained fermented dairy products.

The present invention relates thus to a method for manufacturing a strained fermented dairy product comprising the following successive steps:
(a) providing a dairy product,
(b) adding a lactase and a culture of bacteria comprising at least one strain of thermophilic lactic acid bacteria, with the provision that that it does not comprise any strain of mesophilic lactic acid bacteria, and fermenting the dairy product to obtain a fermented dairy product, and
(c) separating a liquid whey from the fermented dairy product by centrifugation with a centrifugal separator having disks to obtain a strained fermented dairy product,

wherein the lactase is introduced in the dairy product such that at least 80% of lactose of the dairy product is degraded to glucose and galactose,
wherein the thermophilic lactic acid bacteria is growing best at a temperature above 35°C and is selected in the group consisting of *Streptococcus sp., Lactobacillus sp., Bifidobacterium sp.* and combinations thereof,
wherein the mesophilic lactic acid bacteria is growing best at a temperature between 20 and 30°C and is in particular *Lactococcus sp..*

### Dairy product:

In the context of the present invention, "dairy product" designates more particularly a dairy product ready for human consumption made from milk of animal or vegetal origin.

The dairy product based on milk of animal origin can be made from milk and milk components having a cow, goat, sheep, buffalo, donkey or camel origin, preferably a cow origin.

The dairy product based on milk of vegetal origin can be made from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

According to a preferred embodiment, the dairy product is made from milk and milk components of animal origin, and in particular of cow origin.

Food additives can also be present in the dairy product, notably chosen among:
- sugars and sweeteners:
   sugars and sweeteners are food-acceptable carbohydrate sweetening agents that may be natural or artificial, no or low calorie sweeteners,
   preferred examples of appropriate sugars are sucrose, fructose, lactose, glucose and maltose, wherein such sugars can be incorporated in the form of beet sugar, cane sugar, maple sugar, molasses, corn syrup, malt syrup, maple syrup, agave nectar or also honey,
   preferred examples of appropriate no or low calorie sweeteners are aspartame, sucralose, acesulfame potassium, saccharin, sodium cyclamate, thaumatin, tagatose, neohesperidin dihydrochalcone, or isomaltulose,
- vitamins (e.g. vitamin A, B1, B2, B6, B12, C, D, E or K, folic acid, etc.),
- salts (e.g. sodium chloride),
- anti-oxidants,
- pH-modifying agents (e.g. buffering agents or acidifying agents such as citric acid and its salts, for ex. sodium, potassium or calcium citrate),
- lubricants (e.g. vegetable oils),
- preservatives (e.g. sorbic acid and its salts such as sodium, potassium and calcium salts, sulphur dioxide, benzoic acid and its salts such as sodium, potassium and calcium salts, ethyl, methyl or propyl p-hydroxybenzoate, etc.),
- taste exhausters (e.g. glutamic acid and its salts such as sodium, potassium, calcium, magnesium or ammonium salts),
- texturizing agents:
   texturizing agents are used to modify the overall texture or mouthfeel of a food product and include gelling agents (for ex. gelatine, agar, carrageenan, pectin, natural gums), stabilisers (for ex. starch, agar, pectin, Arabic gum, gelatin), emulsifiers (for ex. lecithin, mono- and di-glycerides of fatty acids (E471), esters of mono- and di-glycerides of fatty acid (E472a-f)), and thickeners (for ex.guar gum, xanthan gum, pectin, starch, agar, carrageenan, alginic acid),
- flavouring aromatic agents of synthetic or natural origin (e.g. fruit flavours),
- colouring agents (pigments, dyes, etc.), and
- vegetal ingredients (such as fruits and fruit pieces).

If need be, the skilled person will be able to choose appropriate food additives among all the well-known food additives available on the market. These food additives can be added at different stages of the method of manufacturing of the strained fermented dairy product.

### Strained fermented dairy product:

The dairy product produced by the method according to the present invention is a strained fermented dairy product.

In the context of the present invention, "strained fermented dairy product" designates more particularly a strained fermented dairy product ready for human consumption, such as a strained fermented milk such as, skyr, greek or a strained yoghurt "also called concentrated yoghurt, Greek-style yoghurt or labneh.

The terms "fermented milk" and "yoghurt" are given their usual meanings in the field of the dairy industry, that is, products intended for human consumption and originating from acidifying lactic fermentation of a milk substrate, having an animal or vegetal origin, preferably an animal origin.

The expression "fermented milk" is thus reserved in the present application for a dairy product prepared with a milk substrate which has undergone treatment at least equivalent to pasteurisation, seeded with microorganisms belonging to the characteristic species or species of each product.

The term "yoghurt" is reserved for fermented milk obtained, according to local and constant usage, by the development of specific thermophilic lactic bacteria known as *Lactobacillus delbrueckii* subsp. *bulgaricus* and *Streptococcus thermophilus,* which must be in the living state in the finished product, at a minimum rate. In certain countries, regulations require the addition of other lactic acid bacteria to the production of yoghurt, and especially the additional use of strains of *Bifidobacterium* and/or *Lactobacillus acidophilus* and/or *Lactobacillus casei.* These additional lactic acid bacteria strains are intended to impart various properties to the finished product, such as that of favouring equilibrium of intestinal flora or modulating the immune system.

In practice, the expression "fermented milk" is therefore generally used to designate fermented milks other than yoghurts.

The term "strained" dairy product refers to a dairy product obtained by a separation step in which a liquid whey is separated from a solid phase (the strained dairy product), such as in step (c) of the method according to the invention.

The strained fermented dairy product obtained by the method according to the invention can have a total protein content comprised between 6 and 16%, notably between 7 and 12%, such as between 8 and 10%.

The "total protein content" of a dairy product corresponds to the weight of the proteins present in the dairy product relatively to the total weight of the dairy product. The total protein content is expressed as a weight percentage.

The total protein content can be measured by Kjeldahl analysis (NF EN ISO 8968-1) as the reference method for the determination of the total protein content of dairy products based on measurement of total nitrogen content. The method is described in both AOAC Method 991.20 (1) and international Dairy Federation Standard (IDF) 20B:1993.

The strained fermented dairy product obtained by the method according to the invention can have a fat content comprised between 0 and 6%, notably between 1 and 5%, such as between 2 and 3%.

The "fat content" of the dairy product corresponds to the weight of the fat components present in the dairy product relatively to the total weight of the dairy product. The fat content is expressed as a weight percentage.

The fat content can be measured by the Weibull-Berntrop gravimetric method described in the standard NF ISO 8262-3.

The strained fermented dairy product used in the method according to the present invention is a high textured dairy product, i.e. a thick dairy product having a viscosity comprised between 1500 and 5000 mPa.s, notably between 3000 and 4000 mPa.s, advantageously between 3300 and 3700 mPa.s.

The viscosity is measured at 24 h (i.e 24h after the production of the product) by a viscometer, more particularly of Rheomat type, equipped with a measuring bob / measuring tube system of type 2 / 2 with a shear rate of 64 s⁻¹ during 90 s at 10°C. The viscometer can be for example a Rheomat RM200. The measuring bob / measuring tube system of 2-2 type is a system in which the measuring bob is of type 2 and has a diameter of 24 mm and the measuring tube is of type 2 and has a diameter of 26.03 mm.

The viscosity of the dairy product is the viscosity as measured after 24h cold storage at 2 to 6°C after the end of step (c). Indeed, this viscosity can change during the shelf life of the product. In particular, the viscosity of a fermented dairy product increases during its shelf life.

### Step (a) - Providing a dairy product

The dairy product used as a starting material to prepare the strained fermented dairy product according to the invention is a non-fermented dairy product, also called dairy mix or dairy starting material, containing milk and milk components of animal or vegetal origin, and optionally other food additives such as those indicated previously. The dairy product is thus obtained by the mixing of its various ingredients.

The milk and milk components of animal original can be whole milk and/or wholly or partly skimmed milk, which can be used in a powder, concentrated or retentate form which can be reconstituted by addition of water. Other milk components can be added such as cream, casein, caseinate (for ex. calcium or sodium caseinate), whey proteins notably in the form of a concentrate (WPC), milk proteins notably in the form of a concentrate (MPC), milk protein hydrolysates and mixtures thereof.

The milk and milk components of animal origin can have a cow, goat, sheep, buffalo, donkey or camel origin, preferably a cow origin.

The milk and milk components of vegetal origin can be obtained from grain milk such as barley milk, oat milk, rice milk or spelt milk; legumes-based milk such as lupin milk, pea milk, peanut milk or soy milk; nut milk such as almond milk, cashew milk, hazelnut milk or walnut milk; or seed milk such as hemps milk, quinoa milk, sesame seed milk, sunflower seed milk or coconut milk. It contains thus vegetal proteins. Preferably, the dairy product based on milk of vegetal origin will be made from soy milk, oat milk, rice milk or almond milk.

According to a preferred embodiment, the dairy product is made from milk and milk components of animal origin, and in particular of cow origin.

The dairy product provided in step(a) can have a total protein content comprised between 2.8 and 4.6%, notably between 3.1 and 4.0%, such as between 3.2 and 3.6%.

The dairy product provided in step(a) can have a fat content between 0 and 5.0%, preferably between 0 and 2.0%, notably between 0.05 and 1.0%, such as between 0.1 and 0.3%.

According to an embodiment, the dairy product provided in step a) is a heat-treated dairy product.

The heat-treatment of the dairy product is also called pasteurisation. It aims to kill microorganisms, including pathogenic microorganisms, in the dairy product in order to preserve the quality and the organoleptic properties of the final product and to prevent the consumer to be infected by pathogenic microorganisms present in the dairy product and develop diseases.

The heat-treatment is commonly performed at a temperature (heat-treatment temperature) comprised between 72°C and 140°C, preferably during 2 seconds to 30 minutes.

The heat-treatment can also be performed in several steps, notably two steps, where the dairy product is heated at distinct temperatures in each step. For example, the heat-treatment can be performed according to the two following successive steps:
(1) a first step of pre heat-treatment performed at a temperature comprised between 55 and 95°C, notably until a temperature between 90 and 95°C is reached,
(2) a second step of heat-treatment performed at a temperature comprised between 90 and 95°C, notably for 2 to 7 min,

Advantageously, a homogenisation step is performed between the 2 heating steps, notably at a pressure comprised between 20 and 300 bars (20-300.10⁵ Pa), notably between 50 and 250 bars (50-250.10⁵ Pa).

### Step (b) - Adding lactase and a culture of bacteria and Fermentation

Lactase and a culture of bacteria are added to the dairy product, in particular to a dairy product which has been heat-treated. The dairy product is fermented at a temperature (fermentation temperature) between 25°C and 44°C, notably between 30 and 40°C, in particular for 3 to 25 hours, preferably for 5 to 15 hours.

The lactase and the culture of bacteria cannot be added to the dairy product at a too high temperature and are generally added at the fermentation temperature. Consequently, when the dairy product has been heat-treated, it is necessary to cool the heat-treated dairy product obtained at the end of the heat-treatment step to the fermentation temperature before inoculating the lactase and the culture of bacteria and performing the fermentation step.

The fermentation step is commonly a lactic fermentation which involves techniques well-known to the skilled person.

When reference is made to a "lactic fermentation", this means an acidifying lactic fermentation which results in milk coagulation and acidification following the production of lactic acid which may be accompanied by the production of other acids, carbon dioxide and various substances such as exopolysaccharides (EPS) or aromatic substances, for example diacetyl and acetaldehyde.

Various bacteria can be used for performing the fermentation of the dairy product and in particular lactic acid bacteria such as:
- *Lactobacillus sp.* (for ex. *Lactobacillus bulgaricus,* and especially *Lactobacillus delbrueckii* subsp. *bulgaricus Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus* and combinations thereof),
- *Bifidobacterium sp.* (for ex. *Bifidobacterium bifidum, Bifidobacterium infantis, Bifidobacterium animalis* and especially *Bifidobacterium animalis* subsp. *lactis, Bifidobacterium breve, Bifidobacterium longum* and combinations thereof),
- *Streptococcus sp.* (for ex. *Streptococcus thermophilus, Streptococcus lactis, Streptococcus raffinolactis, Streptococcus cremoris* and combinations thereof),
and combinations thereof.

Preferred lactic acid bacteria to be used in the present invention are selected from *Lactobacillus bulgaricus, Streptococcus thermophilus,* and combinations thereof.

More preferred lactic acid bacteria to be used in the present invention are selected from:
- *Lactobacillus delbrueckii* subsp. *bulgaricus* deposited under the number CNCM I-1632 or *Lactobacillus delbrueckii* subsp. *bulgaricus* deposited under the number CNCM I-1519,
- *Streptococcus thermophilus* deposited under the number CNCM-1630,
- *Bifidobacterium animalis* subsp. *lactis* deposited under the number CNCM-2494, and combinations thereof. The above mentioned lactic acid bacteria have been deposited under the Budapest treaty at the Collection Nationale de Cultures de Micro-organismes (CNCM) located at Institut Pasteur's headquarters (25 rue du Docteur Roux 75724 PARIS Cedex 15 FRANCE).

In the framework of the present invention, the culture of bacteria comprises:
- at least one strain of thermophilic lactic acid bacteria, such as *Streptococcus sp.,* or *Lactobacillus* sp. and/or *Bifidobacterium* sp.

By "thermophilic lactic acid bacteria" is meant, in the present invention, lactic acid bacteria that grow best at a temperature above 35°C, notably between 38 and 44°C. The thermophilic lactic acid bacteria is selected in the group consisting of *Streptococcus sp., Lactobacillus sp., Bifidobacterium sp.* and combinations thereof, such as defined previously, and notably *Streptococcus thermophilus, Lactobacillus delbrueckii* subsp. *bulgaricus, Bifidobacterium animalis* subsp. *lactis,* or a combination thereof.

By "mesophilic lactic acid bacteria" is meant, in the present invention, lactic acid bacteria that grow best at a temperature between 20 and 30°C. The mesophilic lactic acid bacteria can be in particular *Lactococcus* sp. such as defined previously, and even more particularly *Lactococcus lactis* subsp. *lactis.*

According to a preferred embodiment, the culture of bacteria used in the present invention comprises: at least one strain of thermophilic lactic acid bacteria selected from *Streptococcus thermophilus, Streptococcus lactis, Streptococcus raffinolactis, Streptococcus cremoris, Lactobacillus bulgaricus,* and especially *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* and especially *Bifidobacterium animalis* subsp. *lactis, Bifidobacterium breve, Bifidobacterium longum* and a mixture thereof,

According to a particular embodiment, the culture of bacteria used in the present invention comprises at least one strain of thermophilic lactic acid bacteria strain selected from *Streptococcus* sp., *Lactobacillus* sp., and a mixture thereof. Such cultures are available on the market. Examples include culture YoMix^{®} 495 marketed by Dupont.

According to another embodiment, the culture of bacteria comprises at least one strain of *Bifidobacterium* sp.. The *Bifidobacterium* sp.can be *Bifidobacterium bifidum, Bifidobacterium infantis, Bifidobacterium animalis* and especially *Bifidobacterium animalis* subsp. *lactis, Bifidobacterium breve, Bifidobacterium longum* or a combination thereof.

The fermentation step will be stopped, notably by cooling, advantageously when the breaking pH is reached, i.e. a pH comprised between 4.80 and 4.20, notably between 4.65 and 4.35.

The lactase used in the present invention can be any kind of lactase such as Maxilact^{®} marketed by DSM, in particular Maxilact^{®} Lgi 5000 or Ha-lactase^{™} 5200 commercialized by CHR Hansen. Lactase or beta-galactosidase (E.C:3.2.1.23) is an enzyme, which catalyzes the hydrolysis of lactose (a disaccharide) into its component monosaccharides glucose and galactose. Lactases have been isolated from a large variety of micro-organisms. The lactase may be an intracellular or an extracellular produced lactase.

In the framework of the present invention, the lactase is advantageously added in an amount of 0.005 wt% to 0.20 wt%, in particular 0.01 wt% to 0.15 wt%, preferably 0.02 wt% to 0.06 wt%, based on the total weight of the dairy product.

The lactase enzyme is introduced in the dairy material such that at least 80%, preferably at least 90%, preferably 95% of lactose of the dairy material is degraded to glucose and galactose, preferably at pH above 5.0 preferably at a fermentation temperature.

The lactase and the culture of bacteria are added to the dairy product simultaneously or separately. Advantageously, the lactase is added before or along with the culture of bacteria. Preferably, the lactase is added to the dairy product before the culture of bacteria, notably 10 to 40 min before the culture of bacteria, in particular 20 to 30 min before the culture of bacteria.

Indeed, it has been surprisingly demonstrated that the addition of lactase to the dairy product slightly before the culture of bacteria allows further improving the separation step.

It was also been believed that the addition of lactase to the strained dairy product allows improving the control of the texture and/or the appareance and/or the taste of the product and/or the stability, for example with the reduction of post-acidification in the strained fermented dairy product and/or allows an improved sugar reduction in the strained fermented dairy product and/or enriched liquid whey composition, that can be further valorized.

According to a preferred embodiment, no other enzyme will be added in this step (b) or another step of the method according to the invention. In particular, no chymosin (present in rennet) will be added in this step (b) or another step of the method according to the invention.

### Step (c) - Separating a liquid phase (called whey) from the fermented dairy product

After fermentation, the fermented dairy product is subjected to a separating step in order to form a strained fermented dairy product having a higher total protein amount than the one of the starting fermented dairy product.

In this step, a liquid phase (the whey) containing mainly water, lactose and minerals is separated from the fermented dairy product so that the strained fermented dairy product remains.

This step is performed by centrifugation with a centrifugal separator having disks.

This step is advantageously performed at a temperature (separation temperature) comprised between 30 and 45°C, notably between 35 and 43°C. Consequently, it could be necessary to heat or cool (notably heat) the fermented dairy product obtained at the end of the fermentation step (b) to the separation temperature before performing the separation step (c).

Advantageously, most of the proteins contained in the fermented dairy product remains in the final strained fermented dairy product. The protein recovery rate (PRR) is thus advantageously above 93 wt%, preferably above 95 wt%.

By "protein recovery rate" is meant, in the present invention, the percent ratio between the total protein content (in wt) in the fermented dairy product and the total protein content (in wt) in the strained fermented dairy product (i.e. the ratio of the total protein content (in wt) in the dairy product before and after the separation step (c)).The strained fermented dairy product obtained at the end of this step will have thus advantageously a total protein content comprised between 6 and 16%, notably between 7 and 12%, such as between 8 and 10%. Indeed, the aim of the separation step (c) is to obtain a target total protein content.

In the absence of lactase, a clogging of the separating device might be observed after only few hours of operation of the production line requiring to stop the production line and to clean the separating device.

Actually, the clogging issue referred here is not related to standard nozzles clogging, commonly observed in standard centrifugal separation processes, when small particles collapses one or two nozzles and the outlet flow rates of the device are affected as immediate consequences.

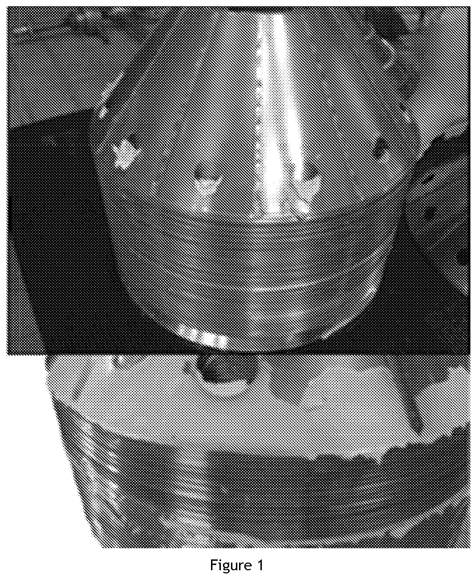

The clogging phenomenon described here can be observed between the separation disks of the centrifugal device (see Figure 1) and also all along the rising channels of the device. An accumulation of proteins present at a very high concentration (around 29% protein analysed) seems to be the most probable source of encountered problem. Therefore, the impact on flow rates modifications observed when a standard nozzles clogging occurs are not observed in this type of clogging. In this case main impacts that can be observed are:
- sudden decrease of total protein content in the strained fermented dairy product,
- sudden increase of total protein content in the separated whey, and
- no improvement whatever inlet flow increase is applied, sometimes making worse the situation.

It can be hypothesized that a small part of proteins not solubilized could "initiate" the clogging by sticking onto the walls of the separating device due to a specific biofilm produced by the specificity of the bacteria strains used in the fermentation step. Then, the more the process is going ahead, the more the proteins accumulate on the disks.

When a clogging issue occurs, the total protein content in the liquid phase or whey increases, whereas the total protein content in the strained fermented dairy product decreases. In addition to the clogging issue, it is then difficult or impossible to reach the target total protein content in the final strained fermented dairy product, no matter the inlet flow applied.

Without wishing to be bound by any theory, the inventors are of the opinion that this disks clogging issue could be due to the production of exopolysaccharides (EPS) by the bacteria which could lead to the obtaining of a gel structure having a lower permeability, an increased water binding, and the formation of a biofilm which can stick to the inner walls of the separating device. It is believed that the lactase addition, at the time of the fermentation step, allows overcoming this clogging issue probably by modifying the metabolism of the bacteria used for the fermentation step impacting then the EPS production (notably in amount and/or in nature).

### Optional Step (d) - Smoothing

A smoothing step (e) can also be performed after the separation step (c).

This smoothing step can be carried out by means of a rotor stator mixer such as defined in WO 2007/095969.

This step can be carried out at a temperature (smoothing temperature) of between 30 and 45°C.

### Optional Step (e) - Cooling

Advantageously, the strained fermented dairy product is a refrigerated product, i.e. a product having a storage temperature of between 1 and 10°C, notably between 4 and 8°C.

The method according to the invention can thus comprise after step (c), and notably after step (d) when a smoothing step is performed, an additional step (e) of cooling the strained fermented dairy product to its storage temperature.

### Optional Step (f) - Adding food additives after the separation step

It could be envisaged to add to the strained fermented dairy product, after the separation step (c), and notably after step (d) when a smoothing step is performed, and notably after step (e) when a cooling step is performed, additional food additives, such as a cream material and/or a fruit preparation, if necessary.

The cream material can be cream or a mixture of cream and milk. It can have a fat content of from 20 to 50 wt%, in particular from 23 to 40 wt%.

The fruit preparation can be selected from fruits, fruit pieces, fruit puree, fruit compote, fruit sauce, fruit coulis, fruit jam, fruit jelly, fruit juice and mixtures thereof, optionally in a concentrated or dried form, optionally present in a matrix.

For example, the fruit(s) of the fruit-based preparation can be selected from strawberry, raspberry, blackberry, blueberry, cherry, apricot, peach, pear, apple, plum, pineapple, mango, banana, papaya, passion fruit, pomelo, orange, lemon, kiwi, coconut, vanilla and mixtures thereof.

The present invention relates also to the use of a lactase for preventing the clogging of the separating device used in the preparation of a strained fermented dairy product.

The strained fermented dairy product can be as defined previously. In particular, the strained fermented dairy product will have a total protein content comprised between 6 and 16%, notably between 7 and 12%, such as between 8 and 10%. The strained fermented dairy product can be more particularly a refrigerated product, i.e. a product having a storage temperature of between 1 and 10°C, notably between 4 and 8°C.

This strained fermented dairy product is prepared from a fermented dairy product by a separation step, using a separating device. The separating device is advantageously a centrifugal separator. The separation step can be performed notably as defined above for step (c). The separation step can be followed by a cooling step of the strained fermented dairy product to its storage temperature.

The fermented dairy product used to prepare the strained fermented dairy product will have advantageously a total protein content comprised between 2.8and 4.6%, notably between 3.1 and 4.0%, such as between 3.2 and 3.6%. The fermented dairy product can be prepared from a dairy product, notably as defined in step (a) above. The preparation of the fermented dairy product from the dairy product comprises at least a fermentation step using notably the culture of bacteria defined previously. This fermentation step is advantageously preceded by a heat-treatment step. The fermentation step and the heat-treatment step can be performed as defined previously (see steps (a) and (b)).

The lactase can be any kind of lactase such as:

| **Commercial reference** | **Supplier** |
|---|---|
| Ha-lactase^{™} 5200 | CHR Hansen |
| Maxilact^{®} Lgi 5000 | DSM |

The lactase and the culture of bacteria can be added simultaneously or separately. Advantageously, the lactase is added before or along with the culture of bacteria. Preferably, the lactase is added before the culture of bacteria, notably 10 to 40 min before the culture of bacteria, in particular 20 to 30 min before the culture of bacteria.

Further details or advantages of the invention might appear in the following non-limitative examples.

### Examples

### Example 1 - strained fermented dairy composition

A strained fermented dairy composition is prepared with the following dairy mix formulation:

| | |
|---|---|
| Condensed Milk (34%) | 6.42% |
| Culture Yo-Mix^{®} 495, Dupont | 0.004% |
| Lactase Maxilact^{®} LGI 5000, DSM | 2850 NLU/L |
| Skim Milk | To 100% |

The dairy mix has a fat content of 0.1% by weight and a protein content of about 3.4% by weight.

A strained fermented dairy composition is prepared according to the following procedure:
- homogenization at a temperature of 60°C, at a pressure of 69 bars,
- heat treatment of milk at a temperature of 95°C during 6.5 minutes,
- cooling to 40°C
- addition of enzyme
- inoculation of milk at 40°C with culture
- fermentation at a temperature of 40°C to reach a breaking pH of 4.65,
- separation, at a temperature of 41.5°C, of 72% of whey, with a Westphalia KNA3 pilot scale centrifuge separator, to obtain:
   A) a strained dairy fermented product, and
   B) an acid whey by-product, and
- dynamic smoothing, performed on the strained fermented dairy product.

The strained fermented dairy composition has a protein content of 10.6% and a fat content of 0.3%.

### Example 2 - Flavored product

A vanilla flavored product is prepared by mixing 92% by weight of the strained fermented dairy composition of example 1 and 8% by weight of a vanilla flavored slurry comprising a stevia extract as sweetener.

## Claims

1. A method for manufacturing a strained fermented dairy product comprising the following successive steps:
(a) providing a dairy product,
(b) adding a lactase and a culture of bacteria comprising at least one strain of thermophilic lactic acid bacteria, with the provision that that it does not comprise any strain of mesophilic lactic acid bacteria, and fermenting the dairy product to obtain a fermented dairy product, and
(c) separating a liquid whey from the fermented dairy product by centrifugation with a centrifugal separator having disks to obtain a strained fermented dairy product,
wherein the lactase is introduced in the dairy product such that at least 80% of lactose of the dairy product is degraded to glucose and galactose,
wherein the thermophilic lactic acid bacteria is growing best at a temperature above 35°C and is selected in the group consisting of *Streptococcus sp., Lactobacillus sp., Bifidobacterium sp.* and combinations thereof,
wherein the mesophilic lactic acid bacteria is growing best at a temperature between 20 and 30°C and is in particular *Lactococcus* sp..

2. The method according to claim 1, wherein the dairy product provided in step (a) has a total protein content comprised between 2.8 and 4.6%, notably between 3.1 and 4.0%.

3. The method according to claim 2, wherein the dairy product provided in step (a) has a total protein content comprised between 3.2 and 3.6%.

4. The method according to any one of claims 1 to 3, wherein the strained fermented dairy product obtained has a total protein content comprised between 6 and 16%, notably between 7 and 12%.

5. The method according to claim 4, wherein the strained fermented dairy product obtained has a total protein content comprised between 8 and 10%.

6. The method according to any one of claims 1 to 5, wherein the strain of thermophilic lactic acid bacteria is selected from *Lactobacillus bulgaricus* and especially *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* and especially *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* and combinations thereof.

7. The method according to any one of claims 1 to 6, wherein the strain of thermophilic lactic acid bacteria is selected from *Lactobacillus delbrueckii* subsp. *bulgaricus, Streptococcus thermophilus* and combinations thereof.

8. The method according to any one of claims 1 to 7, wherein the lactase is added before the culture of bacteria.

9. The method according to claim 8, wherein the lactase is added 10 to 40 min before the culture of bacteria.

10. The method according to claim 9, wherein the lactase is added 20 to 30 min before the culture of bacteria.

11. The method according to any one of claims 1 to 10, wherein the lactase is added in an amount of 0.01 wt% to 0.15 wt based on the total weight of the dairy product.

12. The method according to claim 11, wherein the lactase is added in an amount of 0.02 wt% to 0.06 wt% based on the total weight of the dairy product.

13. The method according to any one of claims 1 to 12, wherein the dairy product is fermented at a temperature between 25°C and 44°C, notably between 30 and 40°C, for 3 to 25 hours, preferably for 5 to 15 hours.

14. The method according to any one of claims 1 to 13, comprising an additional step (e) after step (c) of cooling the strained fermented dairy product to a temperature of between 1 and 10°C, notably between 4 and 8°C.

## Patentansprüche

1. Verfahren zur Herstellung eines durchgeseihten fermentierten Milchprodukts, das die folgenden aufeinanderfolgenden Schritte umfasst:
(a) Bereitstellen eines Milchprodukts,
(b) Zugeben einer Lactase und einer Kultur von Bakterien, die mindestens einen Stamm von thermophilen Milchsäurebakterien umfasst, mit der Maßgabe, dass sie keinen Stamm von mesophilen Milchsäurebakterien umfasst, und Fermentieren des Milchprodukts, um ein fermentiertes Milchprodukt zu erhalten, und
(c) Trennen einer flüssigen Molke von dem fermentierten Milchprodukt durch Zentrifugierung mit einem Zentrifugalabscheider, der Scheiben aufweist, um ein durchgeseihtes fermentiertes Milchprodukt zu erhalten,
wobei die Lactase derart in das Milchprodukt eingeführt wird, dass mindestens 80 % der Lactose des Milchprodukts in Glucose und Galactose abgebaut werden,
wobei die thermophilen Milchsäurebakterien am besten bei einer Temperatur von über 35°C wachsen und ausgewählt werden aus der Gruppe, die besteht aus *Streptococcus sp., Lactobacillus sp., Bifidobacterium* sp. und Kombinationen davon,
wobei die mesophilen Milchsäurebakterien am besten bei einer Temperatur von zwischen 20 und 30°C wachsen und insbesondere *Lactococcus sp.* sind.

2. Verfahren nach Anspruch 1, wobei das in Schritt (a) bereitgestellte Milchprodukt einen Gesamtproteingehalt von zwischen 2,8 und 4,6 %, insbesondere von zwischen 3,1 und 4,0 %, aufweist.

3. Verfahren nach Anspruch 2, wobei das in Schritt (a) bereitgestellte Milchprodukt einen Gesamtproteingehalt von zwischen 3,2 und 3,6 % aufweist.

4. Verfahren nach einem der Ansprüche 1 bis 3, wobei das durchgeseihte fermentierte Milchprodukt einen Gesamtproteingehalt von zwischen 6 und 16 %, insbesondere von zwischen 7 und 12 %, aufweist.

5. Verfahren nach Anspruch 4, wobei das erhaltene durchgeseihte fermentierte Milchprodukt einen Gesamtproteingehalt von zwischen 8 und 10 % aufweist.

6. Verfahren nach einem der Ansprüche 1 bis 5, wobei der Stamm von thermophilen Milchsäurebakterien ausgewählt wird aus *Lactobacillus bulgaricus* und insbesondere *Lactobacillus delbrueckii subsp. bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* und insbesondere *Bifidobacterium animalis subsp. lactis, Bifidobacterium breve, Bifidobacterium longum, Streptococcus thermophilus, Streptococcus lactis, Streptococcus raffinolactis, Streptococcus cremoris* und Kombinationen davon.

7. Verfahren nach einem der Ansprüche 1 bis 6, wobei der Stamm von thermophilen Milchsäurebakterien ausgewählt wird aus *Lactobacillus delbrueckii subsp. bulgaricus, Streptococcus thermophilus* und Kombinationen davon.

8. Verfahren nach einem der Ansprüche 1 bis 7, wobei die Lactase vor der Kultur der Bakterien zugegeben wird.

9. Verfahren nach Anspruch 8, wobei die Lactase 10 bis 40 Minuten vor der Kultur der Bakterien zugegeben wird.

10. Verfahren nach Anspruch 9, wobei die Lactase 20 bis 30 Minuten vor der Kultur der Bakterien zugegeben wird.

11. Verfahren nach einem der Ansprüche 1 bis 10, wobei die Lactase in einer Menge von zwischen 0,01 Gew.-% und 0,15 Gew.-%, bezogen auf das Gesamtgewicht des Milchprodukts, zugegeben wird.

12. Verfahren nach Anspruch 11, wobei die Lactase in einer Menge von 0,02 Gew.-% bis 0,06 Gew.-%, bezogen auf das Gesamtgewicht des Milchprodukts, zugegeben wird.

13. Verfahren nach einem der Ansprüche 1 bis 12, wobei das Milchprodukt bei einer Temperatur von zwischen 25°C und 44°C, insbesondere von zwischen 30 und 40°C, während 3 bis 25 Stunden, vorzugsweise während 5 bis 15 Stunden, fermentiert wird.

14. Verfahren nach einem der Ansprüche 1 bis 13, das nach dem Schritt (c) einen zusätzlichen Schritt (e) des Kühlens des durchgeseihten fermentierten Milchprodukts auf eine Temperatur von zwischen 1 und 10°C, insbesondere von zwischen 4 und 8°C, umfasst.

## Revendications

1. Procédé de fabrication d'un produit laitier fermenté filtré comprenant les étapes successives suivantes :
(a) fournir un produit laitier,
(b) ajouter une lactase et une culture de bactéries comprenant au moins une souche de bactéries lactiques thermophiles, à la condition qu'elle ne comprenne aucune souche de bactéries lactiques mésophiles, et fermenter le produit laitier pour obtenir un produit laitier fermenté, et
(c) séparer du lactosérum liquide du produit laitier fermenté par centrifugation à l'aide d'un séparateur centrifuge à disques pour obtenir un produit laitier fermenté filtré,
dans lequel la lactase est introduite dans le produit laitier de telle sorte qu'au moins 80 % du lactose du produit laitier est dégradé en glucose et galactose,
dans lequel la bactérie lactique thermophile se développe mieux à une température supérieure à 35°C et est choisie dans le groupe constitué de *Streptococcus sp., Lactobacillus sp., Bifidobacterium sp.* et leurs combinaisons,
dans lequel la bactérie lactique mésophile se développe le mieux à une température comprise entre 20 et 30 °C et est en particulier *Lactococcus* sp..

2. Procédé selon la revendication 1, dans lequel le produit laitier fourni à l'étape (a) a une teneur en protéines totales comprise entre 2,8 et 4,6 %, notamment entre 3,1 et 4,0 %.

3. Méthode selon la revendication 2, dans laquelle le produit laitier fourni à l'étape (a) a une teneur en protéines totales comprise entre 3,2 et 3,6%.

4. Procédé selon l'une quelconque des revendications 1 à 3, dans lequel le produit laitier fermenté filtré obtenu a une teneur en protéines totales comprise entre 6 et 16%, notamment entre 7 et 12%.

5. Procédé selon la revendication 4, dans lequel le produit laitier fermenté filtré obtenu a une teneur en protéines totales comprise entre 8 et 10%.

6. Procédé selon l'une quelconque des revendications 1 à 5, dans lequel la souche de bactéries lactiques thermophiles est choisie parmi *Lactobacillus bulgaricus* et en particulier *Lactobacillus delbrueckii* subsp. *bulgaricus, Lactobacillus acidophilus, Lactobacillus paracasei, Lactobacillus casei, Lactobacillus pentosus, Lactobacillus helveticus, Lactobacillus reuteri, Lactobacillus plantarum, Lactobacillus bifidus, Bifidobacterium bifidum, Bifidobacterium infantis, Bifidobacterium animalis* et en particulier *Bifidobacterium animalis* subsp. *lactis, Bifidobacterium breve, Bifidobacterium longum, Streptococcus thermophilus, Streptococcus lactis, Streptococcus raffinolactis, Streptococcus cremoris* et leurs combinaisons.

7. Méthode selon l'une quelconque des revendications 1 à 6, dans laquelle la souche de bactéries lactiques thermophiles est choisie parmi *Lactobacillus delbrueckii* subsp. *bulgaricus, Streptococcus thermophilus* et leurs combinaisons.

8. Méthode selon l'une quelconque des revendications 1 à 7, dans laquelle la lactase est ajoutée avant la culture des bactéries.

9. Méthode selon la revendication 8, dans laquelle la lactase est ajoutée 10 à 40 minutes avant la culture de bactéries.

10. Méthode selon la revendication 9, dans laquelle la lactase est ajoutée 20 à 30 min avant la culture de bactéries.

11. Méthode selon l'une quelconque des revendications 1 à 10, dans laquelle la lactase est ajoutée dans une quantité de 0,01 % en poids à 0,15 % en poids par rapport au poids total du produit laitier.

12. Méthode selon la revendication 11, dans laquelle la lactase est ajoutée en une quantité de 0,02 % en poids à 0,06 % en poids par rapport au poids total du produit laitier.

13. Méthode selon l'une quelconque des revendications 1 à 12, dans laquelle le produit laitier est fermenté à une température comprise entre 25°C et 44°C, notamment entre 30 et 40°C, pendant 3 à 25 heures, de préférence pendant 5 à 15 heures.

14. Méthode selon l'une quelconque des revendications 1 à 13, comprenant une étape supplémentaire (e) après l'étape (c) de refroidissement du produit laitier fermenté filtré à une température comprise entre 1 et 10°C, notamment entre 4 et 8°C.
